(19) Europäisches Patentamt / European Patent Office / Office européen des brevets

(11) **EP 4 363 882 B1**

(12) **FASCICULE DE BREVET EUROPEEN**

(45) Date de publication et mention de la délivrance du brevet:
**29.04.2026 Bulletin 2026/18**

(21) Numéro de dépôt: **21815471.4**

(22) Date de dépôt: **17.11.2021**

(51) Classification Internationale des Brevets (IPC):
**G01S 7/02** *(2006.01)*   **G01S 13/931** *(2020.01)*
**H01Q 15/08** *(2006.01)*   **H01Q 19/06** *(2006.01)*

(52) Classification Coopérative des Brevets (CPC):
**G01S 13/931; G01S 7/027; H01Q 1/3233;**
**H01Q 1/3291; H01Q 1/422; H01Q 19/06;**
G01S 2013/93277

(86) Numéro de dépôt international:
**PCT/EP2021/082048**

(87) Numéro de publication internationale:
**WO 2022/117349 (09.06.2022 Gazette 2022/23)**

(54) **ENSEMBLE DE VÉHICULE COMPRENANT UN CAPTEUR RADAR ET UNE LENTILLE À GRADIENT D'INDICE**

FAHRZEUGANORDNUNG MIT EINEM RADARSENSOR UND EINER GRADIENTENINDEXLINSE

VEHICLE ASSEMBLY COMPRISING A RADAR SENSOR AND A GRADIENT-INDEX LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2021 FR 2012491**

(43) Date de publication de la demande:
**08.05.2024 Bulletin 2024/19**

(73) Titulaire: **VALEO VISION**
**93012 Bobigny Cedex (FR)**

(72) Inventeurs:
• **RENAUD, Pierre**
**93012 BOBIGNY Cedex (FR)**
• **ALBOU, Pierre**
**93012 BOBIGNY (FR)**

(74) Mandataire: **Valeo Visibility**
**Service Propriété Industrielle**
**c/o Valeo Vision**
**34, rue Saint André**
**93012 Bobigny (FR)**

(56) Documents cités:
EP-A1- 2 573 872      EP-A1- 3 644 087
DE-A1- 102011 115 829     US-A1- 2018 351 274

**Description**

La présente invention se rapporte à un ensemble de véhicule. Elle trouve une application particulière mais non limitative dans les véhicules automobiles.

Un ensemble de véhicule comprend, de manière connue de l'homme du métier :

- un capteur radar ayant un champ de vision et configuré pour émettre des ondes radars sur une plage de longueurs d'onde dans ledit champ de vision, et
- une lentille disposée en regard dudit capteur radar.

L'ensemble de véhicule est disposé à l'avant ou à l'arrière du véhicule pour répondre à des besoins de détection d'un objet dans l'environnement extérieur du véhicule par le capteur radar. La lentille est courbée pour adapter le champ de vision du capteur radar. En effet, elle permet d'agrandir ou de réduire le champ de vision du capteur radar. Par exemple elle réduit le champ de vision du capteur radar pour augmenter sa portée, ou elle agrandit son champ de vision pour avoir une détection plus large des objets sur les côtés du véhicule. La lentille permet ainsi d'ajuster le champ de vision du capteur radar en fonction des demandes des constructeurs.

Un inconvénient de cet état de la technique est qu'une telle lentille courbée prend de la place, est lourde et coûte cher. De plus, la matière de la lentille absorbe une partie des ondes radars émises par le capteur radar ce qui a pour conséquence de réduire les performances de détection du capteur radar. Cela entraîne ainsi une perte en portée de détection du capteur radar. Par conséquent, cela entraîne une erreur de détection ou aucune détection d'un objet alors que ce dernier est présent dans l'environnement extérieur du véhicule.

On connait les documents EP 2 573 872 A1, DE 10 2011 115829 A1, EP 3 644 087 A1, US 2018/351274 A1, qui présentent entre autre l'inconvénient de ne pas supprimer les réflexion internes des ondes radar sur la lentille.

Dans ce contexte, la présente invention vise à proposer un ensemble de véhicule qui permet de résoudre l'inconvénient mentionné.

A cet effet, l'invention propose un ensemble de véhicule pour véhicule, selon la revendication 1 ainsi qu'une lentille selon la revendication 13.

Selon des modes de réalisation non limitatifs, ledit ensemble de véhicule peut comporter en outre une ou plusieurs caractéristiques supplémentaires prises seules ou selon toutes les combinaisons techniquement possibles, parmi les suivantes.

Selon un mode de réalisation non limitatif, ledit capteur radar est un capteur radar à ondes millimétriques ou hyperfréquences ou micro-ondes.

Selon un mode de réalisation non limitatif, lesdites ondes radars sont émises sur une bande de fréquence comprise entre 100MHz et 5GHz.

Selon un mode de réalisation non limitatif, ladite période de répétition des motifs est inférieure au dixième de ladite longueur d'onde.

Selon un mode de réalisation non limitatif, la lentille est composée de cellules unitaires comprenant chacune un motif et la densité locale desdites motifs dans ladite couche en un point donné de la lentille est égale à la moyenne pondérée de l'ensemble des facteurs de remplissage obtenus pour chaque cellule unitaire située à une distance du point considéré sur la lentille inférieure à une valeur donnée de l'ordre d'une des longueurs d'onde de la plage de longueurs d'onde utilisée.

Selon un mode de réalisation non limitatif, le facteur de remplissage de chaque cellule unitaire est égale à un volume de matière dans ladite cellule unitaire le tout divisé par la période de répétition desdits motifs fois une hauteur maximum dans le motif de ladite cellule unitaire.

Selon un mode de réalisation non limitatif, la densité locale est égale à la largeur fois la longueur d'un motif le tout divisé par la période de répétition desdits motifs. Cela est valable pour un motif cubique ou rectangulaire.

Selon un mode de réalisation non limitatif, l'indice de réfraction local est composé de deux indices de réfraction effectifs fonction de ladite densité locale et de la permittivité des motifs et de la permittivité de l'air.

Selon un mode de réalisation non limitatif, lesdits motifs sont des prismes cylindriques, ou rectangulaires, ou pyramidaux, ou cubiques, ou des portions de tores.

Selon un mode de réalisation non limitatif, un motif comprend des dimensions inférieures à 0.4mm.

Selon un mode de réalisation non limitatif, si l'angle d'incidence est égal à zéro alors l'épaisseur totale est égale à ladite longueur d'onde divisée par deux fois l'indice de réfraction équivalent.

Selon un mode de réalisation non limitatif, l'épaisseur totale est définie avec un angle d'incidence égal à $\arctan(d1/(2e4))$, avec e4 la distance entre ledit capteur radar et ladite lentille et d1 la distance entre une antenne émettrice et des antennes réceptrices dudit capteur radar.

L'invention et ses différentes applications seront mieux comprises à la lecture de la description qui suit et à l'examen des figures qui l'accompagnent :

[Fig. 1] est une vue schématique d'un ensemble de véhicule, ledit ensemble de véhicule comprenant un capteur radar et une lentille, selon un mode de réalisation non limitatif de l'invention,

[Fig. 2] est une vue schématique d'une onde radar émise par le capteur radar de l'ensemble de véhicule de la figure 1 qui se réfléchit partiellement sur la lentille de l'ensemble de véhicule de la figure 1, selon un mode de réalisation non limitatif,

[Fig. 3] est une vue schématique de la lentille de l'ensemble de véhicule de la figure 1, ladite lentille comprenant une sous-couche et une couche de motifs, selon un mode de réalisation non limitatif,

[Fig. 4] est une vue en perspective d'une zone locale des motifs de la couche de motifs de la lentille de la figure 3, selon un mode de réalisation non limitatif de l'invention.

Les éléments identiques, par structure ou par fonction, apparaissant sur différentes figures conservent, sauf précision contraire, les mêmes références.

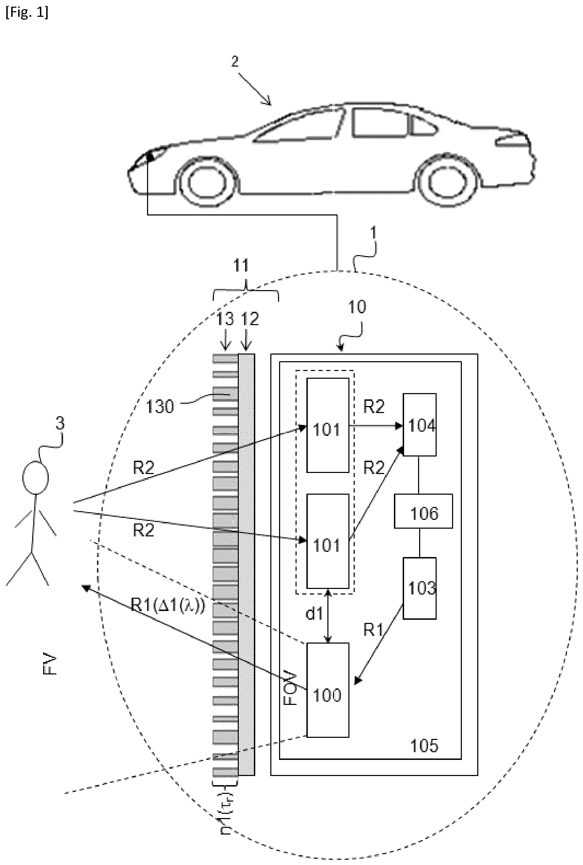

L'ensemble de véhicule 1 d'un véhicule 2 selon l'invention est décrit en référence aux figures 1 à 4. L'ensemble de véhicule 1 est autrement appelé système de véhicule 1. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Dans un mode de réalisation non limitatif, l'ensemble de véhicule 1 est disposé derrière un logo intégré dans la grille du véhicule automobile 2 ou dans une pièce de carrosserie située à l'arrière du véhicule automobile 2. Dans un autre mode de réalisation non limitatif, l'ensemble de véhicule 1 est disposé dans un dispositif d'éclairage ou d'un dispositif de signalisation.

Tel qu'illustré sur la figure 1, l'ensemble de véhicule 1, autrement appelé agencement de véhicule 1, comprend :

- un capteur radar 10 ayant un champ de vision FOV et configuré pour émettre des ondes radars R1, autrement appelées ondes radars primaires R1, dans ledit champ de vision FOV, et
- une lentille 11 disposée en regard dudit capteur radar 10.

Ces éléments sont décrits ci-après.

Le capteur radar 10 est décrit ci-après. Tel qu'illustré sur la figure 1, le capteur radar 10 est disposé en regard de la lentille 11. Dans un mode de réalisation non limitatif, le capteur radar 10 est un capteur radar à ondes millimétriques (entre 24GHz et 300 GHz) ou hyperfréquences (entre 300MHz et 81GHz) ou micro-ondes (entre 1GHz et 300GHz). Dans une variante de réalisation non limitative, le capteur radar 10 fonctionne à une fréquence radar comprise entre 76GHz et 81GHz. Les ondes radars R1 sont émises sur une plage $\Delta 1$ de longueurs d'onde $\lambda$. Dans un mode de réalisation non limitatif, les ondes radars R1 sont émises sur une bande de fréquence comprise entre 100MHz et 5GHz. Ainsi, dans un exemple non limitatif, si le capteur fonctionne à une fréquence radar de 77GHz, soit une longueur d'onde $\lambda$ de 3.95mm, avec une bande de fréquence de 1GHz, le capteur radar 10 fonctionnera sur une bande de fréquence de 76.5GHZ à 77.5GHz. Les ondes radars R1 seront ainsi émises sur la plage de fréquence 76.5GHZ à 77.5GHz, soit une plage $\Delta 1$ de longueurs d'onde $\lambda$ de 3.87mm à 3.92mm. Ainsi, dans autre un exemple non limitatif, si le capteur radar 10 fonctionne à une fréquence radar de 78.5GHz avec une bande de fréquence de 5GHz, le capteur radar 10 fonctionnera sur une bande de fréquence de 76GHZ à 81GHz. Les ondes radars R1 seront ainsi émises sur la plage de fréquence 76GHZ à 81GHz, soit une plage $\Delta 1$ de longueurs d'onde $\lambda$ de 3.701mm à 3.945mm.

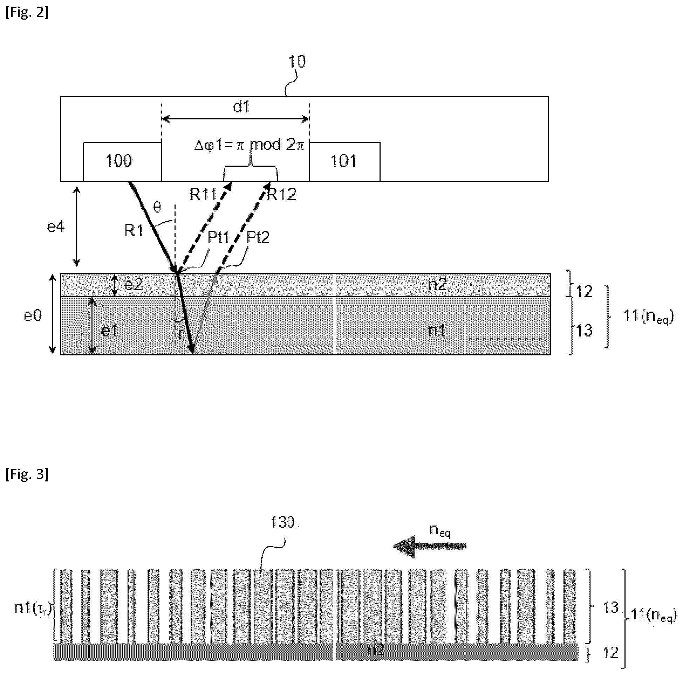

Tel qu'illustré sur la figure 2, les ondes radars R1 émises arrivent avec un angle d'incidence $\theta$ sur la lentille 11. Dans un mode de réalisation non limitatif, l'angle d'incidence $\theta$ est compris entre 0° et +-30°. Le champ de vision FOV varie ainsi entre -30° et +30°. Le centre du champ de vision FOV est un angle de 0° par rapport à l'axe longitudinal du véhicule, autrement appelé axe du véhicule. Dans un autre mode de réalisation non limitatif, le champ de vision FOV varie entre -90° et +45°. Le centre du champ de vision FOV est un angle de -45° par rapport à l'axe du véhicule et l'angle d'incidence $\theta$ des ondes radars R1 sur la lentille 11 restent proches de 0° (l'ensemble de véhicule 1 étant positionné alors à environ 45° de l'axe du véhicule).

Le capteur radar 10 est configuré pour scanner l'environnement extérieur du véhicule automobile 2, grâce à l'émission d'ondes radars R1. Tel qu'illustré sur la figure 1, le capteur radar 10 comprend ainsi :

- au moins une antenne émettrice 100 configurée pour émettre des ondes radars R1, autrement appelées ondes radars primaires R1,
- au moins deux antennes réceptrices 101 configurées pour recevoir des ondes radars R2, autrement appelées ondes radars secondaires R2 ou ondes radars de retour R2.

Le capteur radar 10 comprend en outre au moins un émetteur 103 configuré pour générer les ondes radars primaires R1 et au moins un récepteur 104 configuré pour traiter des ondes radars secondaires R2 reçues en retour. Dans un mode de réalisation non limitatif, un seul composant électronique peut être utilisé pour les deux fonctions émission et réception. On aura ainsi un ou plusieurs émetteur/récepteur appelés « transceiver » dans le langage anglo-saxon. Ledit émetteur 103 génère des ondes radars primaires R1 qui sont par la suite émises par l'antenne émettrice 100, qui lorsqu'elles rencontrent un objet 3 (ici un piéton dans l'exemple non limitatif illustré) dans l'environnement extérieur du véhicule automobile 2 se réfléchissent sur ledit objet 3. Les ondes radars ainsi réfléchies sont des ondes transmises en retour au capteur radar 10. Ce sont les ondes radars secondaires R2 reçues par les antennes réceptrices 101. Ce sont des ondes radars retransmises en direction du capteur radar 10. Dans un mode de réalisation non limitatif, les ondes radars primaires R1 et les ondes radars secondaires R2 sont des ondes radio fréquence. Dans un mode de réalisation non limitatif, le capteur radar 10 comprend une pluralité d'émetteurs 103 et une pluralité de récepteurs 104.

L'antenne émettrice 100, autrement appelée antenne 100, est configurée pour émettre les ondes radars primaires R1 générées par l'émetteur 103. Les antennes réceptrices 101, autrement appelées antennes 101, sont configurées pour recevoir les ondes radars secondaires R2 et les communiquer au récepteur 104 qui les traite par la suite. Il existe un déphasage entre les ondes radars secondaires R2 reçues par les antennes réceptrices 101 qui permet d'en déduire la position angulaire de l'objet 3 par rapport au véhicule automobile 2, objet 3 qui se trouve dans l'environnement extérieur du véhicule automobile 2. Dans des modes de réalisation non limitatifs, les antennes 100, 101 sont des antennes pastilles autrement appelée dans le langage anglo-saxon « patch antenna » ou des antennes à fente autrement appelée dans le langage anglo-saxon « slot antenna ».

Dans un mode de réalisation non limitatif, les antennes 100, 101, l'émetteur 103 et le récepteur 104 sont disposés sur une carte à circuit imprimé 105. Dans un mode de réalisation non limitatif, la carte à circuit imprimé est une carte à circuit imprimé rigide autrement appelée PCBA (« Printed Circuit Board Assembly » dans le langage anglo-saxon ou une carte à circuit imprimé flexible, autrement appelé « Flexboard » dans le langage anglo-saxon.

Le capteur radar 10 comprend en outre une unité de contrôle électronique 106 configurée pour contrôler l'émetteur 103 et le récepteur 104. Un capteur radar étant connu de l'homme du métier, il n'est pas décrit plus en détail ici.

La lentille 11 est décrite ci-après. La lentille 11 est à gradient d'indice. Autrement dit, la lentille 11 est plate et possède un indice de réfraction équivalent $n_{eq}$ à l'échelle des longueurs d'onde $\lambda$ de la plage $\Delta 1$ de longueurs d'onde. Il est variable à l'échelle desdites longueurs d'onde $\lambda$ en raison de l'indice de réfraction n1 (de la couche 13) qui est variable, l'indice de réfraction n2 (de la sous-couche 12) étant constant.

La lentille 11 permet d'adapter le champ de vision FV de l'ensemble de véhicule 1 en faisant varier l'indice de réfraction équivalent $n_{eq}$ en conséquence au moyen de la densité des motifs 130 (décrits plus loin) et de leur taille. On obtient ainsi un ensemble de véhicule 1 ayant un champ de vision FV différent du champ de vision FOV du capteur radar 10. On peut ainsi obtenir notamment un large champ de vision FV à partir d'un capteur radar 10 longue portée (champ de vision FOV réduit) ou un champ de vision FV réduit à partir d'un capteur radar 10 à portée réduite (champ de vision large FOV), selon les demandes des constructeurs. La lentille 11 est disposée entre le capteur radar 10 et l'extérieur du véhicule automobile 2.

Tel qu'illustré sur les figures 2 et 3, la lentille 11 comprend une sous-couche 12 et une couche 13 de motifs 130. La sous-couche 12 est configurée pour supporter la couche 13 de motifs 130. Elle possède un indice de réfraction n2. Dans des modes de réalisation non limitatifs, la sous-couche 12 est formée d'un matériau en plastique, en verre ou en céramique. Dans un exemple non limitatif, le plastique est du polycarbonate. La couche 13 de motifs 130 forme un élément diélectrique structuré sub-longueur d'ondes. Elle possède un indice de réfraction n1 dépendant des motifs 130 et de leur espacement autrement appelé indice de réfaction local n1. Dans des modes de réalisation non limitatifs, l'élément diélectrique est formé d'un matériau en plastique, en verre ou en céramique. Dans un exemple non limitatif, le plastique est du polycarbonate. On rappelle qu'un matériau diélectrique est non conducteur et laisse donc passer les ondes radars R1 contrairement à un matériau conducteur.

Par structuré, on entend que la couche 13 comprend les motifs 130, autrement appelés structures. Par sub-longueur d'ondes, on entend que le matériau diélectrique structuré est à une échelle plus petite que les longueurs d'onde $\lambda$ de ladite plage $\Delta 1$. Le fait que les motifs 130 de la couche 13 soient sub-longueur d'ondes permet la modélisation de cette couche 13 comme une couche à indice variable. Dans le cas contraire, la couche 13 devrait être considérée comme un élément optique diffractif.

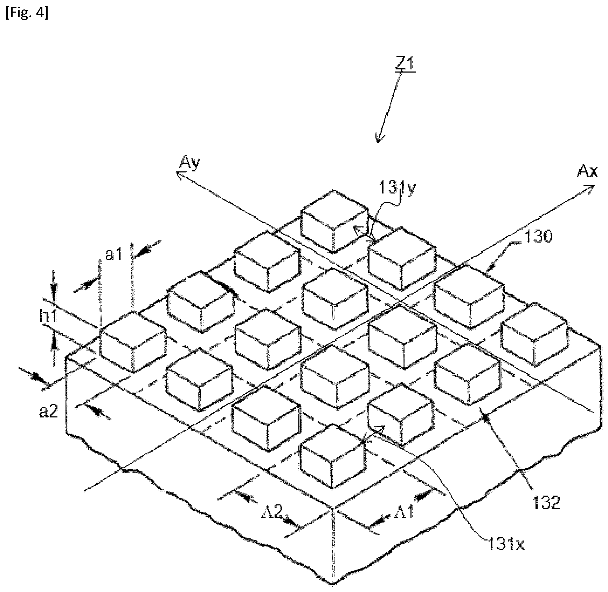

Tel qu'illustré sur la figure 4 qui est une vue d'une zone locale Z1 des motifs 130 de la couche 13, les motifs 130 présentent des dimensions a1 (largeur), a2 (largeur), h1 (hauteur). Dans des modes de réalisation non limitatifs, les motifs 130 sont des prismes cylindriques (autrement appelé piliers cylindres), ou rectangulaires (autrement appelé piliers rectangles), ou pyramidaux (autrement appelé piliers pyramides), ou cubiques (autrement appelé piliers carrés), ce dernier cas étant illustré sur la figure 4, ou encore des portions de tores. Ils peuvent également avoir toute autre forme parallélépipédique. Dans un mode de réalisation non limitatif, un motif 130 comprend des dimensions a1, a2 inférieures à 0.4mm. Cette valeur est très petite devant les longueurs d'onde $\lambda$ de ladite plage $\Delta 1$. Par exemple une longueur d'onde $\lambda$ de ladite plage $\Delta 1$ est de 4mm pour une fréquence de 77GHz ; dans ce cas, la valeur de a1, a2 est environ égale à $\lambda/10$.

Tel qu'illustré sur la figure 4, la lentille 11 est composée de cellules unitaires 132 comprenant chacune un motif 130 et une portion d'air entourant ledit motif 130. Dans une variante de réalisation non limitative non illustrée, les motifs 130 sont contigus (jointifs) sur la surface limite entre la couche 13 et la sous-couche 12. Cette variante non limitative est applicable pour des motifs 130 en forme de pyramide ou de portion de tores. La cellule unitaire 132 est définie par la période de répétition A des structures 130, autrement appelé période de répétition Λ des motifs 130 ou encore période du réseau A, avec A=A1xA2. A1 est la période du réseau selon une première direction Ax (illustrée sur la figure 4), et A2 est la période du réseau selon une deuxième direction Ay (illustrée sur la figure 4). Ax et Ay sont des directions arbitraires non parallèles entre elles. Dans un mode de réalisation non limitatif, la deuxième direction Ay est perpendiculaire à la première direction Ax. Dans un autre exemple non limitatif, la cellule unitaire 132 un carré, un hexagone, un parallélogramme ou toute autre forme qui permet de paver périodiquement la surface limite entre la couche 13 et la sous-couche 12. On notera Az, une troisième direction perpendiculaire à la première direction Ax et à la deuxième direction Ay, le tout formant un repère Ax, Ay, Az.

Dans un premier mode de réalisation non limitatif, l'élément diélectrique structuré sub-longueur d'ondes qu'est la couche 13 est un élément diélectrique périodique structuré sub-longueur d'ondes. Les dimensions a1, a2 des motifs 130 changent le long de la couche 13 pour faire varier l'indice de réfraction de la lentille 1, tandis que A1 et A2 sont constants. Autrement dit, les motifs 130 sont espacés de façon identique entre eux selon une première direction Ax (illustrée sur la figure 4) et sont espacés de façon identique selon une deuxième direction Ay (illustrée sur la figure 4) perpendiculaire à la première direction Ax. Autrement dit, la couche 13 comprend des espacements 131x identiques selon la première direction Ax, et des espacements 131y identiques selon la deuxième direction Ay (illustrés sur la figure 4) entre les motifs 130, à savoir il y a la même proportion d'air entre les motifs 130.

Dans un autre mode de réalisation non limitatif illustré sur la figure 3, l'élément diélectrique structuré sub-longueur d'ondes qu'est la couche 13 n'est pas périodique. A1 et A2 changent le long de la couche 13 pour faire varier l'indice de réfraction de la lentille 1, tandis que les dimensions a1, a2 des motifs 130 sont constantes. La couche 13 comprend des espacements 131x, 131y variables entre les motifs 130, à savoir il y a des proportions d'air différentes entre les motifs 130. On peut également faire varier A1 et A2 et les dimensions a1, a2 des motifs 130 pour faire varier l'indice de réfraction de la lentille 1.

Par sub-longueur d'ondes, on entend que la période du réseau A1, A2 est inférieure au quart d'une longueur d'onde $\lambda$ de ladite plage $\Delta$1 de longueurs d'onde $\lambda$. Dans un exemple non limitatif, la longueur d'onde $\lambda$ considérée est la plus petite des longueurs d'onde dans ladite plage $\Delta$1. Ainsi, A1$< \lambda$/4 et $\Lambda$2$<\lambda$/4. Dans un mode de réalisation non limitatif, la période du réseau A1, A2 est inférieure au dixième de ladite longueur d'onde $\lambda$. Ainsi, $\Lambda$1$< \lambda$/10 et $\Lambda$2$<\lambda$/10. On notera que cette longueur d'onde $\lambda$ est choisie dans ladite plage $\Delta$1 et sera celle utilisée pour les formules ci-dessous.

Tel qu'illustré sur la figure 2, lorsqu'une onde radar R1 est émise par le capteur radar 10, elle chemine jusqu'à la lentille 11 qui comprend une épaisseur e0. L'onde radar R1 arrive sur la lentille 11 avec un angle d'incidence $\theta$ auquel correspond un angle réfracté r. L'onde radar R1 se réfléchit sur la lentille 11 et génère deux ondes réfléchies, dont l'une R11 a été réfléchie sur la face extérieure de la sous-couche 12 de la lentille 11 et l'autre à l'intérieur de la lentille 11. Les deux ondes réfléchies R11 et R12 sont des ondes réfléchies dites d'ordre 1 qui reviennent sur le capteur radar 10. Ce sont des réflexions parasites. Lorsque l'angle d'incidence $\theta$ est différent de 0°, l'angle réfracté correspondant r est différent de 0° également. La différence de phase $\Delta\varphi$, autrement appelé déphasage $\Delta\varphi$, entre ces deux ondes réfléchies R11 et R12 est égal à :

[Math1]

$$\Delta\varphi = \frac{n_{eq}\delta}{\lambda} + \pi - \frac{2e0\,tan(r)\,sin(\theta)}{\lambda}$$

Avec :

- $n_{eq}$, l'indice de réfraction équivalent pour la sous-couche 12 et la couche 13,
- $\delta$ le trajet de l'onde réfléchie R12 dans la matière égal à 2e0 /cos(r),
- $n\delta/\lambda$ le déphasage dû au parcours dans la matière,
- $\pi$ le déphasage dû à la réflexion interne dans la sous-couche 12 et la couche 13 de motifs 130,
- - ((2e0 tan(r) sin($\theta$))/$\lambda$) le déphasage dans l'air dû l'écart entre le point de réflexion Pt1 de l'onde réfléchie R11 et le point d'émergence Pt2 de l'onde réfléchie R12.

Comme sin($\theta$) = $n_{eq}$ x sin(r), on obtient :

[Math2]

$$\frac{-2e0\tan(r)\sin(\theta)}{\lambda} = \frac{-2e0\,n_{eq}\sin(r)^2}{\lambda\cos(r)}$$

Soit :

[Math3]

$$\Delta\varphi = \pi + \frac{2n_{eq}\mathrm{e}0}{\lambda\cos(r)}(1 - \sin(r)^2) = \pi + \frac{2n_{eq}\mathrm{e}0\cos(r)}{\lambda}$$

et ce quelque soit la valeur de l'angle réfracté r.

Comme les ondes réfléchies R11 et R12 reviennent en direction du capteur radar 10, elles entraînent des perturbations sur le capteur radar 10, à savoir une atténuation du rapport signal sur bruit. Afin de supprimer ces perturbations, on va définir l'épaisseur totale e0 de la lentille 11 de sorte que les ondes réfléchies R11 et R12 soient en opposition de phase pour créer des interférences destructrices. Pour obtenir des interférences destructrices, la différence de phase $\Delta\varphi$ entre les deux ondes réfléchies R11 et R12 doit être égale à $\pi$ modulo $2\pi$. Ainsi, on a $\Delta\varphi = (2m+1)^*\pi$, avec m un entier naturel. On obtient donc :

[Math 4]

$$(2m + 1)\,\pi = \pi + \frac{2n_{eq}\mathrm{e}0\cos(r)}{\lambda}$$

Soit :

Soit e0 = m m $\lambda$/ (2n$_{eq}$ cos (r)).

On notera que l'équation e0 = m $\lambda$/ (2n$_{eq}$ cos (r)) est appliquée quelle que soit la valeur de l'angle r. Ainsi, cette épaisseur totale e0 est dimensionnée de sorte qu'elle soit égale à m fois ladite longueur d'onde $\lambda$ le tout divisé par deux fois un indice de réfraction équivalent n$_{eq}$ de la couche 13 de motifs 130 et de la sous-couche 12, fois le cosinus d'un angle réfracté r correspondant à l'angle d'incidence $\theta$ des ondes radars R1, avec m entier. Ainsi, à partir de l'indice de réfraction équivalent n$_{eq}$ et de la longueur d'onde $\lambda$ utilisée sur la plage de fréquence de fonctionnement du capteur radar 10, l'épaisseur totale e0 peut être déterminée de sorte que lesdites ondes réfléchies R11 et R12 s'annulent entre elles. Dans un mode de réalisation non limitatif, la longueur d'onde utilisée est celle qui se situe au milieu de la plage $\Delta$1 autorisée.

Une épaisseur totale e0 idéale est définie lorsque l'angle d'incidence est égal à 0; et m est égal à 1. Lorsque $\theta = 0$, r = 0. En conséquence pour m=1, l'épaisseur totale e0 idéale de la lentille 11 est donc e0 = $\lambda$ /(2n$_{eq}$). Quand r = 0°, à savoir cos (r) = 1.

Dans un mode de réalisation non limitatif, la lentille 11 comprend une épaisseur totale e0 qui est comprise entre 0,8 et 1,2 fois ladite épaisseur totale e0 idéale. Cette plage de valeurs prend en compte les angles d'émission possibles du capteur radar 10. Les valeurs possibles de l'angle d'incidence $\theta$ sont définies dans les spécifications techniques du capteur radar 10, ce qui signifie que les valeurs possibles de l'angle d'incidence $\theta$ sont en le champ de vision FOV du capteur radar 10. Dans un exemple non limitatif, l'angle d'incidence $\theta$ est compris entre 0° et + -30 °. Cette valeur de plage de 0,8 à 1,2 permet de prendre en compte les tolérances de fabrication de l'épaisseur totale e0.

On notera qu'il existe une valeur de l'angle d'incidence $\theta$ pour laquelle les ondes radars réfléchies R11 et R12 entraînent une perturbation maximum des antennes réceptrices 101 du capteur radar 10. Cet angle d'incidence $\theta$ est appelé angle d'incidence $\theta$ critique. Dans un mode de réalisation non limitatif, cette valeur est égale à $\theta$= arctan(d1/(2e4)), avec d1 la distance entre l'antenne émettrice 100 et les antennes réceptrices 101, e4 la distance entre le capteur radar 10 et la lentille 11 tel qu'illustré sur la figure 2. On notera que dans un exemple non limitatif l'on prend le point milieu des antennes réceptrices 101 pour calculer d1.

Ainsi, en fonction de la valeur de l'indice de réfraction local n1 et de la longueur d'onde $\lambda$ utilisée sur la plage de fréquence de fonctionnement du capteur radar 10 (entre 76GHZ à 81GHZ dans l'exemple non limitatif pris), on peut déterminer la valeur de l'épaisseur totale e0 pour que les ondes réfléchies R11 et R12 d'ordre 1 s'annulent entre elles. Les ondes radar réfléchies R11 et R12 sont réfléchies sur la lentille 11 dans une zone limitée. Ainsi, les antennes réceptrices 101 voient moins de bruit. On arrive à un meilleur rapport signal sur bruit.

La lentille 11 comprend une épaisseur totale e0 formée par la hauteur h1 des motifs 130 et par l'épaisseur e2 de la sous-couche 12. Pour dimensionner l'épaisseur totale e0, on ajuste la hauteur h1 des motifs 130 ou l'épaisseur e2 de sorte que e0 = m $\lambda$/ (2$n_{eq}$ cos (r)) pour un r donné. Dans un mode de réalisation non limitatif, le r donné correspond à l'angle d'incidence $\theta$ critique.

L'indice de réfraction équivalent $n_{eq}$ est égal à :

[Math 5]

$$n_{eq} = \frac{n_1 n_2 (e_1 + e_2)}{n_2 e_1 + n_1 e_2} = \frac{n_1 n_2 \left(1 + \frac{e_2}{e_1}\right)}{n_2 + n_1 \left(\frac{e_2}{e_1}\right)}$$

Avec n1 l'indice de réfraction local de la couche 13 de motifs 130, n2 l'indice de réfraction de la sous-couche 12, e1 égal à la hauteur h1 des motifs 130, et e2 l'épaisseur de la sous-couche 12. On notera que n1 est fonction de la position de la zone locale Z1 des motifs 130 sur la couche 13 où on fait le calcul. Ainsi, l'indice de réfraction équivalent $n_{eq}$ est fonction de la position de la zone locale Z1 sur la couche 13.

On notera que la couche 13 de motifs 130 possède un indice de réfraction local n1 qui est calculé en fonction de la densité locale $\tau_r$ desdits motifs 130 dans la couche 13. La densité locale $\tau_r$ en un point de la lentille 11 est la moyenne pondérée du facteur de remplissage $\tau_{r132}$ de chaque cellule 132 située à une distance du point considéré inférieure à une valeur donnée de l'ordre d'une des longueurs d'onde $\lambda$ de la plage $\Delta 1$ de longueurs d'onde utilisée. L'indice de réfraction local n1, est autrement appelé indice de réfraction effectif $n_{eff}$ et est composé de deux indices de réfraction effectifs $n_{effTE}$ et $n_{effTM}$ qui dépendent de la polarisation de l'onde incidente, à savoir l'onde radar primaire R1, et qui sont exprimables en fonction de la densité locale $\tau_r$ (autrement appelée facteur de remplissage $\tau_r$) qui représente la portion de matière occupée par le milieu à fort indice de réfraction n1, à savoir ici les motifs 130, par opposition au milieu à faible indice de réfraction n0, à savoir ici l'air. On notera que la densité locale $\tau_r$ représente la portion de matière occupée par le milieu à fort indice de réfraction n1 sur une zone d'une dimension de l'ordre d'une des longueurs d'onde $\lambda$ de la plage $\Delta 1$ de longueurs d'onde utilisée. On a ainsi :

[Math 6]

$$n_{effTE} = \sqrt{\varepsilon_{effTE}} = \sqrt{\tau_r \varepsilon_{max} + (1 - \tau_r) \varepsilon_{min}}$$

[Math 7]

$$n_{effTM} = \sqrt{\varepsilon_{effTM}} = \frac{1}{\sqrt{\frac{\tau_r}{\varepsilon_{max}} + \frac{1 - \tau_r}{\varepsilon_{min}}}}$$

Avec le terme TE qui désigne la polarisation de l'onde incidente, à savoir ici l'onde radar R1 qui arrive sur la lentille 11, perpendiculaire au plan du substrat, à savoir la sous-couche 12, TM la polarisation parallèle au plan du substrat, et $\varepsilon_{max}$ la permittivité du milieu à l'indice optique le plus élevé, à savoir les motifs 130, et $\varepsilon_{min}$ pour celui ayant le plus faible indice optique, à savoir ici l'air. Dans un autre mode de réalisation non limitatif, l'air peut être remplacé par une matière plastique d'indice très bas.

On notera que lorsque l'onde incidente, ici l'onde radar R1, illumine l'élément diélectrique structuré, à savoir la lentille 11, et présente une longueur d'onde $\lambda$ (de ladite plage $\Delta 1$) beaucoup plus grande que la période de répétition A1, A2 des structures 130 ($\lambda >> \Lambda 1$, et $\lambda >> \Lambda 2$), il s'agit d'un régime de propagation appelé limite statique.

Pour des structures 130, à deux dimensions, telles qu'illustrées sur la figure 4, l'indice de réfraction effectif $n_{eff2D}$ d'une structure 2D peut être approximé en prenant la moyenne quadratique des indices de réfraction effectifs selon les deux polarisations TM et TE en une dimension à l'ordre 0 qui correspond à la limite statique. Le facteur de remplissage $\tau_{r132}$ d'une cellule unitaire 132 est dans ce cas particulier :

[Math 8]

$$\tau_{r132} = \frac{a1.a2}{\Lambda1.\Lambda2}$$

Et on a :

[Math 8]

$$n_{eff2D} = \left[\frac{1}{2}\left(n_{effTE}^2 + n_{effTM}^2\right)\right]^{\frac{1}{2}}$$

Dans le cas plus général, pour une forme de motifs 130 quelconque où A1, A2 sont quelconques, avec une cellule unitaire 132 de base rectangulaire, le facteur de remplissage $\tau_{r132}$ pour une cellule unitaire 132 sera :

[Math 9]

$$\tau_{r132} = \frac{V132}{\Lambda1.\Lambda2.\text{hmax}}$$

Ce qui correspond à un rapport de volume de matière ($V_{132}$) dans la cellule unitaire 132 sur un volume vide englobant (A1 A2hmax), avec hmax la hauteur maximum du motif 130 dans la cellule unitaire 132 (à savoir la plus haute hauteur dans le motif 130), et

[Math 10]

$$V_{132} = \int_0^{\text{hmax}} \int_{X132}^{X132+\Lambda1} \int_{Y132}^{Y132+\Lambda2} M(X, Y, Z)dXdYdZ$$

Avec ($X_{132}$, $Y_{132}$, 0), les coordonnées d'un coin C1 de la cellule unitaire 132 et M(X, Y, Z) = 1 si le point de coordonnées (X, Y, Z) se trouve dans la matière et M(X, Y, Z) = 0 si ce n'est pas le cas, à savoir si le point de coordonnées (X, Y, Z) se trouve dans l'air. On notera que lorsqu'il se trouve dans la matière, le point se trouve dans le motif 130 de la cellule unitaire 132, et lorsqu'il se trouve dans l'air, le point peut se trouver à l'intérieur d'un motif 130 ou non (un motif 130 pouvant en effet comporter des trous d'air dans un exemple non limitatif). On notera que dans l'exemple non limitatif de la figure 4, hmax = h1 décrit précédemment.

On notera que cette formule de volume de matière $V_{132}$ est valable pour toute cellule unitaire 132 de base rectangulaire et ce quelque soit la forme du motif 130 dans ladite cellule unitaire 132. Ainsi, comme A1 et A2 peuvent changer d'une cellule unitaire 132 à une autre cellule unitaire 132 ainsi que la hauteur maximum hmax d'un motif 130 à un autre motif 130, chaque cellule unitaire 132 peut avoir un volume de matière différent et par conséquent un facteur de remplissage $\tau_{r132}$ différent. Pour avoir le facteur de remplissage $\tau_r$ de toute la couche 13 de motifs 130 en un point donné de la lentille 11, on effectue une moyenne pondérée des facteurs de remplissage $\tau_{r132}$ de chaque cellule 132 située à une distance du point considéré sur la lentille 11 inférieure à une valeur donnée de l'ordre d'une des longueurs d'onde λ de la plage Δ1 de longueurs d'onde utilisée. Cette définition est valable pour tous les points de la lentille 11. Dans un mode de réalisation non limitatif, les points appartiennent à la surface de la sous-couche 12 de coordonnée Z=0. . On a ainsi :

[Math 11]

$$\tau_r = \frac{\sum_n \Lambda 1_n . \Lambda 2_n . \text{hmax}_n . \tau_{rn}}{\sum_n \Lambda 1_n . \Lambda 2_n . \text{hmax}_n}$$

Où n désigne l'une quelconque des cellules unitaires 132 située à une distance du point considéré sur la lentille 11 inférieure à une valeur donnée de l'ordre d'une des longueurs d'onde λ de la plage Δ1 de longueurs d'onde utilisée.

On notera que pour réaliser la lentille 11, on utilise des technologies de fabrication à bas coût, d'injection comme méthode de fabrication. Notamment, la sous-couche 12 et la couche 13 de motifs 130 sont réalisées dans la même matière et injectées simultanément ce qui réduit fortement le coût de fabrication. Des technologies de fabrication additives, autrement appelées impression 3D sont également utilisées comme méthode de fabrication.

Bien entendu la description de l'invention n'est pas limitée aux modes de réalisation décrits ci-dessus et au domaine décrit ci-dessus. Ainsi, dans un autre mode de réalisation non limitatif, le capteur radar 10 comprend plus d'une antenne émettrice 100 et plus de deux antennes réceptrices 101.

Ainsi, l'invention décrite présente notamment les avantages suivants :

- elle permet de ne pas réduire la portée du capteur radar 10,
- elle permet de réduire l'encombrement de l'ensemble de véhicule 1 en remplaçant une lentille courbée par une lentille plate,
- elle permet de réduire le coût et le poids de l'ensemble de véhicule 1 en remplaçant une lentille courbée par une lentille plate,
- en remplaçant une lentille courbée par une lentille plate, elle permet de réduire considérablement l'absorption d'une partie des ondes radars R1 émises par le capteur radar 10,
- elle permet comme une lentille courbe d'adapter le champ de vision du capteur radar 10 aux demandes des constructeurs,
- elle permet de supprimer les ondes réfléchies R11, R12, d'ordre 1 qui se réfléchissent en direction du capteur radar 10. Le ratio signal sur bruit dudit capteur radar 10 n'est ainsi plus réduit.

**Revendications**

1.  Ensemble de véhicule (1) pour véhicule (2), ledit ensemble de véhicule (1) comprenant :

    - un capteur radar (10) ayant un champ de vision (FOV) et configuré pour émettre des ondes radars (R1) sur une plage (Δ1) de longueurs d'onde (λ) dans ledit champ de vision (FOV), et
    - une lentille (11) disposée en regard dudit capteur radar (10),
    ladite lentille (11) étant à gradient d'indice, et comprenat une sous-couche (12) et une couche (13) de motifs (130) formant un élément diélectrique structuré sub-longueur d'ondes avec une période de répétition (A1, A2) des motifs (130) qui est inférieure au quart d'une longueur d'onde (λ) de ladite plage (Δ1), la couche (13) de motifs (130) possédant un indice de réfraction local (n1) qui est calculé en fonction d'une densité locale (τ_r) desdits motifs (130) dans ladite couche (13),
    **caractérisé en ce que** ladite lentille (11) comprend une épaisseur totale (e0) formée par la hauteur (h1) desdits motifs (130) et par l'épaisseur (e2) de ladite sous-couche (12), ladite épaisseur totale (e0) étant dimensionnée de sorte qu'elle soit égale à m fois ladite longueur d'onde (λ) le tout divisé par deux fois l'indice de réfraction équivalent ($n_{eq}$) de la couche (13) de motifs (130) et de la sous-couche (12) fois le cosinus d'un angle réfracté (r) correspondant à un angle d'incidence (θ) des ondes radars (R1), avec m entier.

2.  Ensemble de véhicule (1), selon la revendication 1, selon lequel ledit capteur radar (10) est un capteur radar à ondes millimétriques ou hyperfréquences ou micro-ondes.

3.  Ensemble de véhicule (1), selon la revendication précédente, selon lequel lesdites ondes radars (R1) sont émises sur une bande de fréquence comprise entre 100MHz et 5GHz.

4.  Ensemble de véhicule (1), selon l'une quelconque des revendications précédentes, selon lequel ladite période de répétition (A1, A2) des motifs (130) est inférieure au dixième de ladite longueur d'onde (λ).

5.  Ensemble de véhicule (1) selon l'une quelconque des revendications précédentes, selon lequel la lentille (11) est composée de cellules unitaires (132) comprenant chacune un motif (130) et la densité locale (τ_r) desdites motifs (130)

dans ladite couche (13) en un point donné de la lentille (11) est égale à la moyenne pondérée de l'ensemble des facteurs de remplissage ($\tau_{r132}$) obtenus pour chaque cellule unitaire (132) située à une distance du point considéré sur la lentille (11) inférieure à une valeur donnée de l'ordre d'une des longueurs d'onde ($\lambda$) de la plage ($\Delta 1$) de longueurs d'onde utilisée.

6. Ensemble de véhicule (1) selon la revendication précédente, selon lequel le facteur de remplissage ($\tau_{r132}$) de chaque cellule unitaire (132) est égale à un volume de matière ($V_{132}$) dans ladite cellule unitaire (132) le tout divisé par la période de répétition (A1, A2) desdits motifs (130) fois une hauteur maximum (hmax) dans le motif (130) de ladite cellule unitaire (132).

7. Ensemble de véhicule (1) selon l'une quelconque des revendications précédentes, selon lequel la densité locale ($\tau_r$) est égale à la largeur (a1) fois la longueur (a2) d'un motif (130) le tout divisé par la période de répétition (A1, A2) desdits motifs (130).

8. Ensemble de véhicule (1) selon l'une quelconque des revendications précédentes, selon lequel l'indice de réfraction local (n1) est composé de deux indices de réfraction effectifs ($n_{effTE}$, $n_{effTM}$) fonction de ladite densité locale ($\tau_r$) et de la permittivité ($\varepsilon_{max}$) des motifs (130) et de la permittivité de l'air ($\varepsilon_{min}$).

9. Ensemble de véhicule (1) selon l'une quelconque des revendications précédentes, selon lequel lesdits motifs (130) sont des prismes cylindriques, ou rectangulaires, ou pyramidaux, ou cubiques, ou des portions de tores.

10. Ensemble de véhicule (1), selon l'une quelconque des revendications précédentes, selon lequel un motif (130) comprend des dimensions (a1, a2) inférieures à 0.4mm.

11. Ensemble de véhicule (1) selon l'une quelconque des revendications précédentes, selon lequel si l'angle d'incidence ($\theta$) est égal à zéro alors l'épaisseur totale (e0) est égale à ladite longueur d'onde ($\lambda$) divisée par deux fois l'indice de réfraction équivalent ($n_{eq}$).

12. Ensemble de véhicule (1) selon l'une quelconque des revendications précédentes, selon lequel l'épaisseur totale (e0) est définie avec un angle d'incidence ($\theta$) égal à arctan(d1/(2e4)), avec e4 la distance entre ledit capteur radar (10) et ladite lentille (11) et d1 la distance entre une antenne émettrice (100) et des antennes réceptrices (101) dudit capteur radar (10).

13. Lentille (11) configurée pour adapter un champ de vision (FOV) d'un capteur radar (10) d'un véhicule (2) configuré pour émettre des ondes radar (R1), ladite lentille (11) étant disposée en regard dudit capteur radar (10), **caractérisé en ce que** :

   - ladite lentille (11) étant à gradient d'indice, et comprenant une sous-couche (12) et une couche (13) de motifs (130) formant un élément diélectrique structuré sub-longueur d'ondes avec une période de répétition (A1, A2) des motifs (130) qui est inférieure au quart d'une longueur d'onde ($\lambda$) d'une plage ($\Delta 1$) de longueurs d'onde ($\lambda$) sur laquelle sont émises lesdites ondes radars (R1), et dont la couche (13) de motifs (130) possède un indice de réfraction local (n1) qui est calculé en fonction d'une densité locale ($\tau_r$) desdits motifs (130) dans ladite couche (13),

   **caractérisé en ce que** ladite lentille (11) comprend une épaisseur totale (e0) formée par la hauteur (h1) desdits motifs (130) et par l'épaisseur (e2) de ladite sous-couche (12), ladite épaisseur totale (e0) étant dimensionnée de sorte qu'elle soit égale à m fois ladite longueur d'onde ($\lambda$) le tout divisé par deux fois l'indice de réfraction équivalent ($n_{eq}$) de la couche (13) de motifs (130) et de la sous-couche (12) fois le cosinus d'un angle réfracté (r) correspondant à un angle d'incidence ($\theta$) des ondes radars (R1), avec m entier.

**Patentansprüche**

1. Fahrzeugeinheit (1) für ein Fahrzeug (2), wobei die Fahrzeugeinheit (1) umfasst:

   - einen Radarsensor (10) mit einem Sichtfeld (FOV), der konfiguriert ist, um Radarwellen (R1) über einen Bereich (A1) von Wellenlängen ($\lambda$) in dem Sichtfeld (FOV) auszusenden, und
   - eine Linse (11), die gegenüber dem Radarsensor (10) angeordnet ist,

wobei die Linse (11) einen Gradientenindex aufweist und eine Unterschicht (12) und eine Schicht (13) aus Mustern (130) umfasst, die ein strukturiertes dielektrisches Element mit Unterwellenlänge mit einer Wiederholungsperiode (A1, A2) der Muster (130) bilden, die kleiner als ein Viertel einer Wellenlänge ($\lambda$) des Bereichs (A1) ist, wobei die Schicht (13) aus Mustern (130) einen lokalen Brechungsindex (n1) besitzt, der in Abhängigkeit von einer lokalen Dichte (tr) der Muster (130) in der Schicht (13) berechnet wird,

**dadurch gekennzeichnet, dass** die Linse (11) eine Gesamtdicke (e0) umfasst, die durch die Höhe (h1) der Muster (130) und durch die Dicke (e2) der Unterschicht (12) gebildet wird, wobei die Gesamtdicke (e0) so dimensioniert ist, dass sie gleich m mal der Wellenlänge ($\lambda$) geteilt durch zweimal den äquivalenten Brechungsindex (neq) der Schicht (13) aus Mustern (130) und der Unterschicht (12) multipliziert mit dem Kosinus eines gebrochenen Winkels (r) entsprechend einem Einfallswinkel (0) der Radarwellen (R1) ist, wobei m eine ganze Zahl ist.

2. Fahrzeugeinheit (1) nach Anspruch 1, wobei der Radarsensor (10) ein Millimeterwellen- oder Hyperwellen- oder Mikrowellen-Radarsensor ist.

3. Fahrzeugeinheit (1) nach dem vorhergehenden Anspruch, wobei die Radarwellen (R1) auf einem Frequenzband zwischen 100 MHz und 5 GHz ausgesendet werden.

4. Fahrzeugeinheit (1) nach einem der vorhergehenden Ansprüche, wobei die Wiederholungsperiode (A1, A2) der Muster (130) kleiner als ein Zehntel der Wellenlänge ($\lambda$) ist.

5. Fahrzeugeinheit (1) nach einem der vorhergehenden Ansprüche, wobei die Linse (11) aus Einheitszellen (132) besteht, die jeweils ein Muster (130) umfassen, und die lokale Dichte (tr) der Muster (130) in der Schicht (13) an einem bestimmten Punkt der Linse (11) gleich dem gewichteten Mittelwert aller Füllfaktoren (Tr132) ist, die für jede Einheitszelle (132) erhalten werden, die sich in einem Abstand vom betrachteten Punkt auf der Linse (11) befindet, der kleiner als ein gegebener Wert in der Größenordnung einer der Wellenlängen ($\lambda$) des verwendeten Wellenlängenbereichs (A1) ist.

6. Fahrzeugeinheit (1) nach dem vorhergehenden Anspruch, wobei der Füllfaktor (Tr132) jeder Einheitszelle (132) gleich einem Materialvolumen (V132) in der Einheitszelle (132) geteilt durch die Wiederholungsperiode (A1, A2) der Muster (130) multipliziert mit einer maximalen Höhe (hmax) im Muster (130) der Einheitszelle (132) ist.

7. Fahrzeugeinheit (1) nach einem der vorhergehenden Ansprüche, wobei die lokale Dichte (tr) gleich der Breite (a1) multipliziert mit der Länge (a2) eines Musters (130) geteilt durch die Wiederholungsperiode (A1, A2) der Muster (130) ist.

8. Fahrzeugeinheit (1) nach einem der vorhergehenden Ansprüche, wobei der lokale Brechungsindex (n1) aus zwei effektiven Brechungsindizes (neffTe, NeffTM) besteht, die von der lokalen Dichte (tr) und der Permittivität (&max) der Muster (130) und der Permittivität der Luft (&min) abhängen.

9. Fahrzeugeinheit (1) nach einem der vorhergehenden Ansprüche, wobei die Muster (130) zylindrische oder rechteckige oder pyramidenförmige oder würfelförmige Prismen oder Teile von Tori sind.

10. Fahrzeugeinheit (1) nach einem der vorhergehenden Ansprüche, wobei ein Muster (130) Abmessungen (a1, a2) kleiner als 0,4 mm umfasst.

11. Fahrzeugeinheit (1) nach einem der vorhergehenden Ansprüche, wobei, wenn der Einfallswinkel (0) gleich Null ist, die Gesamtdicke (e0) gleich der Wellenlänge ($\lambda$) geteilt durch zweimal den äquivalenten Brechungsindex (neq) ist.

12. Fahrzeugeinheit (1) nach einem der vorhergehenden Ansprüche, wobei die Gesamtdicke (e0) mit einem Einfallswinkel (0) gleich arctan(d1/(2e4)) definiert ist, wobei e4 der Abstand zwischen dem Radarsensor (10) und der Linse (11) und d1 der Abstand zwischen einer Sendeantenne (100) und Empfangsantennen (101) des Radarsensors (10) ist.

13. Linse (11), die konfiguriert ist, um ein Sichtfeld (FOV) eines Radarsensors (10) eines Fahrzeugs (2) anzupassen, der konfiguriert ist, um Radarwellen (R1) auszusenden, wobei die Linse (11) gegenüber dem Radarsensor (10) angeordnet ist, **dadurch gekennzeichnet, dass**:

- die Linse (11) einen Gradientenindex aufweist und eine Unterschicht (12) und eine Schicht (13) aus Mustern (130) umfasst, die ein strukturiertes dielektrisches Element mit Unterwellenlänge mit einer Wiederholungsperiode (A1, A2) der Muster (130) bilden, die kleiner als ein Viertel einer Wellenlänge ($\lambda$) eines Bereichs (A1) von Wellenlängen ($\lambda$) ist, auf dem die Radarwellen (R1) ausgesendet werden, und deren Schicht (13) aus Mustern (130) einen lokalen Brechungsindex (n1) besitzt, der in Abhängigkeit von einer lokalen Dichte ($\tau_r$) der Muster (130) in der Schicht (13) berechnet wird,

**dadurch gekennzeichnet, dass** die Linse (11) eine Gesamtdicke (e0) umfasst, die durch die Höhe (h1) der Muster (130) und durch die Dicke (e2) der Unterschicht (12) gebildet wird, wobei die Gesamtdicke (e0) so dimensioniert ist, dass sie gleich m mal der Wellenlänge ($\lambda$) geteilt durch zweimal den äquivalenten Brechungsindex (neq) der Schicht (13) aus Mustern (130) und der Unterschicht (12) multipliziert mit dem Kosinus eines gebrochenen Winkels (r) entsprechend einem Einfallswinkel (0) der Radarwellen (R1) ist, wobei m eine ganze Zahl ist.

## Claims

1. Vehicle assembly (1) for a vehicle (2), said vehicle assembly (1) comprising:

   - a radar sensor (10) having a field of vision (FOV) and configured to emit radar waves (R1) over a range (A1) of wavelengths ($\lambda$) in said field of vision (FOV), and
   - a lens (11) arranged facing said radar sensor (10),
   said lens (11) being a gradient-index lens, and comprising a sublayer (12) and a layer (13) of patterns (130) forming a sub-wavelength structured dielectric element with a repetition period (A1, A2) of the patterns (130) that is less than a quarter of a wavelength ($\lambda$) of said range (A1), the layer (13) of patterns (130) having a local refractive index (n1) that is calculated based on a local density (tr) of said patterns (130) in said layer (13),
   **characterized in that** said lens (11) comprises a total thickness (e0) formed by the height (h1) of said patterns (130) and by the thickness (e2) of said sublayer (12), said total thickness (e0) being dimensioned so that it is equal to m times said wavelength ($\lambda$) all divided by twice the equivalent refractive index (neq) of the layer (13) of patterns (130) and of the sublayer (12) times the cosine of a refracted angle (r) corresponding to an angle of incidence (0) of the radar waves (R1), with m being an integer.

2. Vehicle assembly (1), according to claim 1, wherein said radar sensor (10) is a millimeter wave or hyperfrequency or microwave radar sensor.

3. Vehicle assembly (1), according to the preceding claim, wherein said radar waves (R1) are emitted on a frequency band between 100MHz and 5GHz.

4. Vehicle assembly (1), according to any one of the preceding claims, wherein said repetition period (A1, A2) of the patterns (130) is less than one-tenth of said wavelength ($\lambda$).

5. Vehicle assembly (1) according to any one of the preceding claims, wherein the lens (11) is composed of unit cells (132) each comprising a pattern (130) and the local density (tr) of said patterns (130) in said layer (13) at a given point of the lens (11) is equal to the weighted average of all the filling factors (Tr132) obtained for each unit cell (132) located at a distance from the considered point on the lens (11) less than a given value of the order of one of the wavelengths ($\lambda$) of the range (A1) of wavelengths used.

6. Vehicle assembly (1) according to the preceding claim, wherein the filling factor (Tr132) of each unit cell (132) is equal to a volume of material (V132) in said unit cell (132) all divided by the repetition period (A1, A2) of said patterns (130) times a maximum height (hmax) in the pattern (130) of said unit cell (132).

7. Vehicle assembly (1) according to any one of the preceding claims, wherein the local density (tr) is equal to the width (a1) times the length (a2) of a pattern (130) all divided by the repetition period (A1, A2) of said patterns (130).

8. Vehicle assembly (1) according to any one of the preceding claims, wherein the local refractive index (n1) is composed of two effective refractive indices (neffTe, NeffTM) as a function of said local density (tr) and the permittivity (&max) of the patterns (130) and the permittivity of air (&min).

9. Vehicle assembly (1) according to any one of the preceding claims, wherein said patterns (130) are cylindrical, or rectangular, or pyramidal, or cubic prisms, or portions of toruses.

10. Vehicle assembly (1), according to any one of the preceding claims, wherein a pattern (130) comprises dimensions (a1, a2) less than 0.4mm.

11. Vehicle assembly (1) according to any one of the preceding claims, wherein if the angle of incidence (0) is equal to zero then the total thickness (e0) is equal to said wavelength ($\lambda$) divided by twice the equivalent refractive index (neq).

12. Vehicle assembly (1) according to any one of the preceding claims, wherein the total thickness (e0) is defined with an angle of incidence (0) equal to arctan(d1/(2e4)), with e4 being the distance between said radar sensor (10) and said lens (11) and d1 being the distance between a transmitting antenna (100) and receiving antennas (101) of said radar sensor (10).

13. Lens (11) configured to adapt a field of vision (FOV) of a radar sensor (10) of a vehicle (2) configured to emit radar waves (R1), said lens (11) being arranged facing said radar sensor (10), **characterized in that**:

  - said lens (11) being a gradient-index lens, and comprising a sublayer (12) and a layer (13) of patterns (130) forming a sub-wavelength structured dielectric element with a repetition period (A1, A2) of the patterns (130) that is less than a quarter of a wavelength ($\lambda$) of a range (A1) of wavelengths ($\lambda$) on which said radar waves (R1) are emitted, and whose layer (13) of patterns (130) has a local refractive index (n1) that is calculated based on a local density ($\tau$r) of said patterns (130) in said layer (13),

  **characterized in that** said lens (11) comprises a total thickness (e0) formed by the height (h1) of said patterns (130) and by the thickness (e2) of the sublayer (12), said total thickness (e0) being dimensioned so that it is equal to m times said wavelength ($\lambda$) all divided by twice the equivalent refractive index (neq) of the layer (13) of patterns (130) and of the sublayer (12) times the cosine of a refracted angle (r) corresponding to an angle of incidence (0) of the radar waves (R1), with m being an integer.

[Fig. 1]

[Fig. 2]

[Fig. 3]

[Fig. 4]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2573872 A1
- DE 102011115829 A1
- EP 3644087 A1
- US 2018351274 A1